# EUROPÄISCHE PATENTSCHRIFT

(11) **EP 3 721 700 B1**
(45) Veröffentlichungstag und Bekanntmachung des Hinweises auf die Patenterteilung: **21.06.2023**
(21) Anmeldenummer: 20168473.5
(22) Anmeldetag: 07.04.2020
(51) Int. Cl.: A01F 15/07

(54) **BALLENWICKELVORRICHTUNG FÜR EINE RUNDBALLENPRESSE UND RUNDBALLENPRESSE**
ROUND BALER AND BALE WRAPPING DEVICE FOR A ROUND BALER
DISPOSITIF D'ENROULEMENT DE BALLES POUR UNE PRESSE À BALLES RONDES ET PRESSE À BALLES RONDES

(30) Priorität: 12.04.2019 DE 102019205327
(43) Veröffentlichungstag der Anmeldung: 14.10.2020
(73) Patentinhaber: Deere & Company, Moline, IL 61265 (US)
(72) Erfinder: LEBEAU, JONATHAN, 68163 Mannheim (DE); GRESSET, PASCAL, 68163 Mannheim (DE); PERROTIN, FREDERIC, 68163 Mannheim (DE)
(74) Vertreter: Stein, Stefan

(56) Entgegenhaltungen:
- EP-A1- 1 872 648
- EP-A1- 2 982 235
- EP-A1- 3 284 336
- EP-B1- 1 872 648
- WO-A1-2010/112373

## Beschreibung

Die Erfindung betrifft eine Ballenwickelvorrichtung gemäss dem Oberbegriff des unabhängigen Anspruchs 1 und eine Rundballenpresse mit einer Ballenwickelvorrichtung gemäss dem Oberbegriff des unabhängigen Anspruchs 10.

Rundballenpressen sind bekannt. Ferner ist es bekannt, Rundballenpressen mit einer Ballenwickelvorrichtung auszurüsten, wodurch ein gepresster Rundballen mit einem Umwicklungsmaterial umwickelt wird und im Anschluss daran in gewickelter Form ausgeworfen werden kann. Der Rundballen wird in einer Presskammer, insbesondere einer zylindrischen Presskammer, der Rundballenpresse während einer Ballenbildungsphase in Form gebracht. Dazu wird auf dem Boden liegendes Erntegut von einer Erntegutaufnahmeeinrichtung in die Presskammer gefördert und durch angeordnete Pressmittel ein zylindrischer Rundballen geformt. Die Presskammer kann als feste Presskammer, mit zylindrisch angeordneten Presswalzen, oder auch als variable Presskammer, mit variablen Pressmitteln, beispielsweise Pressriemen oder Pressketten, ausgebildet sein. Die EP 3 284 336 A1 offenbart eine Ballenwickeleinrichtung für eine Rundballenpresse, mit einer Antriebsrolle, die mit einer Umwicklungsmaterialrolle in Eingriff bringbar ist und einer mit der Antriebsrolle verbundenen Antriebs- und Bremseinrichtung.

In einer der Ballenbildungsphase folgenden Einführungsphase, wird von einer Umwicklungsmaterialrolle ein Umwicklungsmaterial in Richtung des mittlerweile ausgeformten Rundballens in die Presskammer geführt und von der Außenseite des Ballens mitgerissen. Als Umwicklungsmaterial wird, üblicherweise Netz, Folie oder Garn verwendet. Durch den sich drehenden Rundballen wird das Umwicklungsmaterial in einer Wickelphase um den Rundballen geführt. Es folgt eine Trennphase, in der das Umwicklungsmaterial durch eine Trenneinrichtung vom Ballen getrennt wird, bevor der Ballen in der Ballenauswurfphase ausgeworfen bzw. auf den Boden abgelegt wird. Es hat sich als problematisch herausgestellt, insbesondere bei Folien, dass bei verschiedenen Umwicklungsmaterialien auch verschiedene Entlastungen und/oder Straffungen und/oder Spannungen des Umwicklungsmaterials notwendig sind. Beispielsweise kann es notwendig sein, eine Brems- oder Beschleunigungskraft in Abhängigkeit von der Art des Materials des Umwicklungsmaterials einzustellen und/oder auf die Umwicklungsmaterialrolle und/oder das Umwicklungsmaterial wirken zu lassen, insbesondere auch für die entsprechenden Phasen. Bei nicht angepasster Entlastung und/oder Straffung und/oder Spannung des Umwicklungsmaterials kann es zu Verwicklungen des Umwicklungsmaterials mit den Pressmitteln oder auch zu fehlerhaften Umwicklungsmaterialtrennungen kommen, was den Ballenpressprozess unter Umständen stören oder gar unterbrechen würde. Ausserdem kann, wenn eine nicht angepassten Bremskraft auf die Umwicklungsmaterialrolle wirkt, das Umwicklungsmaterial beschädigt werden, was vermieden werden muss.

Ausgehend von diesem Stand der Technik ist es daher eine Aufgabe der vorliegenden Erfindung eine Ballenwickelvorrichtung und eine Ballenpresse vorzuschlagen, die die aus dem Stand der Technik bekannten Nachteile weitgehend vermeiden, insbesondere eine Ballenwickelvorrichtung und eine Ballenpresse vorzuschlagen, bei denen eine Entlastung und/oder Straffung und/oder Spannung des Umwicklungsmaterials in Abhängigkeit von der Art des Umwicklungsmaterials einstellbar ist.

Diese Aufgabe wird durch eine Ballenwickelvorrichtung für eine Rundballenpresse mit den Merkmalen des Anspruchs 1 und eine Rundballenpresse mit den Merkmalen des Anspruchs 10 gelöst.

Die abhängigen Ansprüche beziehen sich auf besonders vorteilhafte Ausführungsformen der Erfindung.

Erfindungsgemäß wird eine Ballenwickelvorrichtung für eine Rundballenpresse vorgeschlagen. Die Ballenwickelvorrichtung umfasst eine Antriebsrolle, mit der ein Umwicklungsmaterial von einer Umwicklungsmaterialrolle abrollbar ist, wobei die Antriebsrolle mit einer Antriebs- und Bremseinrichtung verbunden ist. Die Antriebs- und Bremseinrichtung steht mit einem variabel spannbaren Bremsriemen in Verbindung. Die Ballenwickelvorrichtung umfasst weiter eine Spannhebeleinrichtung und der Bremsriemen ist mit der Spannhebeleinrichtung verbunden. Eine Vorspannung des Bremsriemens ist mittels der Spannhebeleinrichtung zwischen mindestens drei verschiedenen Vorspannungen verstellbar, bevorzugt einstellbar und/oder feststellbar, besonders bevorzugt stufenlos einstellbar und/oder feststellbar. Im Speziellen ist die Ballenwickelvorrichtung derart ausgestaltet, dass die Vorspannung des Bremsriemens mittels der Spannhebeleinrichtung zwischen mindestens drei verschiedenen Vorspannungen verstellbar ist.

Mit anderen Worten, die Vorspannung des Bremsriemens kann also mittels der Spannhebeleinrichtung, insbesondere in einem deaktivierten Betriebszustand der Ballenwickelvorrichtung bzw. der Antriebs- und Bremseinrichtung, derart verstellbar sein, dass die Vorspannung des Bremsriemens zwischen einer ersten Vorspannung und einer zweiten Vorspannung, die insbesondere kleiner als die ersten Vorspannung ist, und einer dritten Vorspannung beweglich sein kann, wobei insbesondere die dritte Vorspannung kleiner als die erste und zweite Vorspannung ist. Im Speziellen kann, insbesondere in einem deaktivierten Betriebszustand der Ballenwickelvorrichtung, die erste Vorspannung eine maximale Vorspannung und die dritte Vorspannung ein Leerlauf sein, in dem der Bremsriemen keine Vorspannung aufweist. Die zweite Vorspannung kann dann in einem Bereich kleiner als die erste Vorspannung und grösser als die dritte Vorspannung verstellbar, insbesondere feststellbar und/oder einstellbar sein. Ebenso können aber auch noch weitere Vorspannungen verstellbare Vorspannungen vorgesehen sein, wobei jeweils gilt, dass das die Vorspannung n kleiner als die Vorspannung n-1 ist und die erste Vorspannung eine maximale Vorspannung und die n-te Vorspannung ein Leerlauf sein kann, beispielsweise mit n = 4, 5, 6, 7, 8, 9 oder 10. Die Vorspannung kann aber auch stufenlos zwischen mindestens drei Vorspannungen verstellbar sein. Die Vorspannung kann eine Spannung am Bremsriemen im deaktivierten Betriebszustand der Ballenwickelvorrichtung sein. Die Riemenspannung kann eine zusätzlich im aktiven Betriebszustand am Bremsriemen anliegende Spannung sein, die mittels einer Spannvorrichtung bereitgestellt werden kann. Ein Bremsmoment der Antriebsrolle kann proportional zur Summe der Vorspannung und Riemenspannung sein. Das Bremsmoment kann in einem Bereich von 0 Nm bis 200 Nm, bevorzugt 0 Nm bis 150 Nm, besonders bevorzugt von 0 Nm bis 100 Nm einstellbar sein. Der Bremsriemen kann an einem ersten Ende an der Spannhebeleinrichtung befestigt, um die Antriebs- und Bremseinrichtung gelegt, und an einem zweiten Ende mit der Spannvorrichtung verbunden sein. Die Spannhebeleinrichtung kann am Rahmen oder einer Seitenwand der Rundballenpresse fixierten sein kann.

Die Antriebsrolle kann mit der Antriebs- und Bremseinrichtung verbunden sein, insbesondere drehfest verbunden sein. Die Antriebs- und Bremseinrichtung kann mit einem variabel spannbaren Antriebsriemen und/oder mit dem variabel spannbaren Bremsriemen in Verbindung stehen. Die Antriebs- und Bremseinrichtung kann mit Antriebsmitteln verbunden sein, sodass die Antriebsrolle mittels der Antriebs- und Bremseinrichtung antreibbar ist, insbesondere drehbar ist. Im Speziellen kann der Antriebsriemen eingangsseitig mit einer Riemenantriebsrolle in Eingriff stehen, wobei letztere mit den Antriebsmitteln verbunden sein kann. Als Antriebsmittel können angetriebene Bauteile, insbesondere direkt oder indirekt angetriebene Presswalzen der Rundballenpresse dienen, derart, dass beispielsweise die Riemenantriebsrolle drehfest mit einer der Presswalzen verbunden ist. Denkbar ist es hier auch einen separaten Antrieb, also einen von den Presswalzen getrennten Antrieb für die Riemenantriebsrolle zu wählen, beispielsweise einen Elektromotor, der in Abhängigkeit verschiedener Betriebsphasen einer Rundballenpresse, insbesondere in der Einführungsphase und/oder der Wickelphase und/oder der Trennphase, ansteuerbar sein kann.

Die Ballenwickelvorrichtung kann die Umwicklungsmaterialrolle mit dem Umwicklungsmaterial umfassen. Das Umwicklungsmaterial kann als eine Folie ausgebildet sein, insbesondere eine Kunststofffolie oder eine Folie aus Kunststoff sein oder eine Kunststoff umfassende Folie oder eine mit Kunststoff beschichtete Folie sein. Das Umwicklungsmaterial kann auch eine Mehrschichtverbundfolie aus einer Kombination unterschiedlicher Kunststoffe sein. Die mechanische Belastbarkeit kann durch Armieren mit Glasfasern oder Einbringung eines Geflechtes erhöht worden sein. Die Antriebsrolle und die Umwicklungsmaterialrolle können zueinander beabstandet sein. Im Speziellen können die Antriebsrolle und die Umwicklungsmaterialrolle derart zueinander beabstandet sein, dass diese nicht miteinander in Eingriff bringbar sind.

Das Umwicklungsmaterial als solches, also das abgerollte Umwicklungsmaterial, ist mit der Antriebsrolle in Eingriff bringbar, sodass die Umwicklungsmaterialrolle mittels des mit der Antriebsrolle in Eingriff stehenden Umwicklungsmaterials indirekt antreibbar ist, indem das Umwicklungsmaterial mittels der Antriebsrolle abrollbar ist, und in die Presskammer führbar ist. Die Umwicklungsmaterialrolle kann also mittels der Antriebsrolle antreibbar sein, indem das Umwicklungsmaterial abgerollt wird.

Die Rundballenpresse, insbesondere die Ballenwickelvorrichtung kann ausserdem zusätzlich eine weitere Umwicklungsmaterialrolle mit einem Garn oder einer Folie einer anderen Art oder einem Netz als weiteres Umwicklungsmaterial umfassen. Die Umwicklungsmateriarolle kann in einem ersten Kompartiment und die weitere Umwicklungsmaterialrolle kann in einem zweiten Kompartiment Rundballenpresse, insbesondere der Ballenwickelvorrichtung angeordnet sein. Das erste und zweite Kompartiment können voneinander beabstandet oder benachbart zueinander sein. Die Antriebsrolle kann mit der weiteren Umwicklungsmaterialrolle in Eingriff bringbar sein bzw. stehen und/oder kann mit dieser in einem Reibschluss stehen. Das Umwicklungsmaterial und das weitere Umwicklungsmaterial können der Presskammer gleichzeitig zuführbar sein, bevorzugt kann jedoch entweder das Umwicklungsmaterial oder das weitere Umwicklungsmaterial der Presskammer zuführbar sein. Die weitere Umwicklungsmaterialrolle kann mittels der Antriebsrolle antreibbar sein, insbesondere auch das weitere Umwicklungsmaterial mittels der Antriebsrolle abrollbar sein, sodass das weitere Umwicklungsmaterial abgegeben wird und in die Presskammer führbar ist. Die weitere Umwicklungsmaterialrolle kann mittels der Antriebsrolle antreibbar sein, indem die Antriebsrolle ihre Drehbewegung auf die mit ihr in Eingriff stehende weitere Umwicklungsmaterialrolle direkt überträgt. Die mit der Antriebsrolle verbundene Antriebs- und Bremseinrichtung kann mittels des Antriebsriemens derart beaufschlagt werden, dass die Antriebsrolle, insbesondere während der Einführungsphase, ein Antriebsmoment erfährt, sodass Umwicklungsmaterial von der Umwicklungsmaterialrolle und/oder das weitere Umwicklungsmaterial von der weiteren Umwicklungsmaterialrolle abgegeben wird und in die Presskammer führbar ist. Die mit der Antriebsrolle verbundene Antriebs- und Bremseinrichtung kann mittels des Bremsriemens derart beaufschlagt werden, dass die Antriebsrolle, insbesondere während der Wickelphase und/oder Trennphase, ein Bremsmoment erfährt, sodass das durch den Ballen mitgerissene bzw. mitgezogene Umwicklungsmaterial und/oder das weitere Umwicklungsmaterial gespannt wird und/oder eine Umwicklungsmaterialtrennung mit optimierter Umwicklungsmaterialspannung erfolgen kann. Durch die variabel spannbaren Antriebs- und/oder Bremsriemen können somit in verschiedenen Betriebsstellungen für die Ballenwickeleinrichtung voneinander unabhängig einstellbare Antriebs- und/oder Bremsmomente an der Antriebs- und Bremseinrichtung bzw. an der Antriebsrolle realisiert und/oder eine Optimierung der Entlastung und/oder Straffung und/oder Spannung des Umwicklungsmaterials ermöglicht werden, insbesondere eine ballenpressphasenabhängige Optimierung.

Wesentlich für die Erfindung ist, dass, dadurch dass die Vorspannung des Bremsriemens, insbesondere in einem deaktivierten Betriebszustand der Ballenwickelvorrichtung bzw. der Antriebs- und Bremseinrichtung, mittels der Spannhebeleinrichtung in mindestens drei verschiedenen Vorspannungen verstellbar ist, ein Bremsmoment der Antriebs- und Bremseinrichtung in Abhängigkeit von der Art des Umwicklungsmaterials verstellt und/oder eingestellt werden kann. Dadurch kann vorteilhafterweise eine Entlastung und/oder Straffung und/oder Spannung des Umwicklungsmaterials in Abhängigkeit von der Art des Umwicklungsmaterials erreicht werden, beispielsweise in Abhängigkeit vom Elastizitätsmodul des Umwicklungsmaterials. Im Speziellen kann die Vorspannung bzw. das Bremsmoment in Abhängigkeit von der Art des Materials derart eingestellt werden, dass dadurch das von dem Rundballen mitgerissene bzw. mitgezogene Umwicklungsmaterial in der Wickelphase optimal gespannt ist und/oder in der Trennphase eine Umwicklungsmaterialtrennung mit optimierter Umwicklungsmaterialspannung erfolgen kann. Darüber hinaus kann so vorteilhafterweise eine Beschädigung und/oder ein Zerreisen des Umwicklungsmaterials vermieden werden.

In Ausgestaltung der Erfindung umfasst die Antriebs- und Bremseinrichtung zumindest eine Bremstrommel. Die Bremstrommel ist drehfest mit der Antriebsrolle verbunden und steht mit dem Bremsriemen in Verbindung. Die Bremstrommel kann beispielsweise als einteilige Trommel oder Riemenscheibe mit einer Riemenführung ausgebildet sein. Über die drehfeste Verbindung der Bremstrommel mit der Antriebsrolle kann letztere über den Bremsriemen abgebremst werden, so dass sich eine variable Drehzahl der Bremstrommel über eine einstellbare Eingriffswirkung des Bremsriemens ergibt. Im Speziellen kann die Antriebs- und Bremseinrichtung auch eine kombinierte Antriebs- und Bremstrommel anstatt einer Bremstrommel umfassen. Die kombinierte Antriebs- und Bremstrommel kann drehfest mit der Antriebsrolle verbunden sein und mit dem Brems- und Antriebsriemen in Verbindung stehen. Die Antriebs- und Bremstrommel kann dabei als einteilige Trommel oder Riemenscheibe mit zwei parallelen Riemenführungen, oder beispielsweise auch durch zwei miteinander drehfest verbundene Riemenscheiben ausgebildet sein. Ebenso kann über die drehfeste Verbindung der Antriebs- und Bremstrommel mit der Antriebsrolle kann letztere über den Antriebsriemen angetrieben und über den Bremsriemen gleichzeitig auch abgebremst werden, so dass sich eine variable Drehzahl der Antriebs- und Bremstrommel über eine einstellbare Eingriffswirkung von Antriebs- und Bremsriemen ergibt.

Die Antriebs- und Bremseinrichtung kann ferner eine betätigbare und auf den Antriebsriemen wirkende Stellvorrichtung umfassen. Über die Stellvorrichtung kann eine Riemenspannung für den Antriebsriemen bereitgestellt werden, so dass der Antriebsriemen variabel in unterschiedliche Spannungszustände spannbar ist. Über den Spannungszustand des Antriebsriemens kann ein auf die Antriebs- und Bremstrommel wirkendes Antriebsmoment variabel eingeleitet werden.

Des Weiteren kann Ballenwickelvorrichtung, insbesondere die Antriebs- und Bremseinrichtung, eine auf den Bremsriemen wirkende Spannvorrichtung umfassen. Die Spannvorrichtung kann ausserdem betätigbar sein. Über die Spannvorrichtung kann eine Riemenspannung für den Bremsriemen bereitgestellt werden, so dass der Bremsriemen im Betriebszustand variabel in unterschiedliche Spannungszustände spannbar ist. Über den Spannungszustand des Bremsriemens kann ein auf die Antriebs- und Bremseinrichtung wirkendes Bremsmoment variabel eingeleitet werden. Im Betriebszustand der Ballenwickelvorrichtung, insbesondere der Antriebs- und Bremseinrichtung, kann also die Riemenspannung des Bremsriemens mittels der Spannvorrichtung verstellbar und/oder einstellbar sein.

In Ausgestaltung der Erfindung umfasst die Spannhebeleinrichtung ein Hebelgestänge, wobei der Bremsriemen, insbesondere ein erstes Ende des Bremsriemens, mit dem Hebelgestänge verbunden ist. Der Bremsriemen, insbesondere das erste Ende des Bremsriemens, ist mit dem Hebelgestänge derart verstellbar, insbesondere feststellbar und/oder verlagerbar und/oder einstellbar, dass die Vorspannung des Bremsriemens mittels des Hebelgestänges zwischen mindestens drei verschiedenen Vorspannungen verstellbar, insbesondere feststellbar und/oder einstellbar ist. Das Hebelgestänge kann automatisch oder manuell verstellbar sein. Die Spannhebeleinrichtung kann einen Aktuator umfassen, beispielsweise einen Elektromotor oder einen Hubzylinder, der mit dem Hebelgestänge zusammenwirkt. Ebenso kann die Spannhebeleinrichtung einen Spannhebel umfassen, insbesondere ein betätigbarer Spannhebel, der mit dem Hebelgestänge zusammenwirkt. Der Spannhebel kann manuell oder auch mit dem Aktuator betätigbar sein. Der Spannhebel kann mittels einer Klammer feststellbar und/oder verriegelbar sein. Das Hebelgestänge kann mit Spannhebel und/oder dem Aktuator verstellbar, insbesondere feststellbar und/oder einstellbar sein, besonders bevorzugt manuell oder automatisch verstellbar, insbesondere feststellbar und/oder einstellbar sein. Bei einer Betätigung des Aktuators und/oder des Spannhebels kann das Hebelgestänge verstellt werden, insbesondere verlagert werden. Im Speziellen können der Aktuator und/oder der Spannhebel mit dem Hebelgestänge und das Hebelgestänge wiederum mit dem Bremsriemen, insbesondere dem ersten Ende des Bremsriemens, derart zusammenwirken und/oder verbunden sein, dass ein Betätigen des Aktuators und/oder des Spannhebels ein Verstellen des Hebelgestänges und das Hebelgestänge wiederum eine Verlagerung des ersten Endes des Bremsriemens bewirkt, wodurch die Vorspannung des Bremsriemens verstellt wird. Das Hebelgestänge kann also mit dem Aktuator und/oder dem Spannhebel betätigbar sein, und zwar derart, dass die Vorspannung des Bremsriemens mittels der Spannhebeleinrichtung, insbesondere dem Hebelgestänge zwischen mindestens drei verschiedenen Vorspannungen einstellbar und/oder feststellbar ist. Im Speziellen kann der Bremsriemen, insbesondere das erste Ende des Bremsriemens, mit dem Hebelgestänge, insbesondere in einem deaktivierten Betriebszustand der Ballenwickelvorrichtung bzw. der Antriebs- und Bremseinrichtung, derart verstellbar, insbesondere verlagerbar und/oder feststellbar und/oder einstellbar sein, dass die Vorspannung des Bremsriemens zwischen einer ersten Vorspannung und einer zweiten Vorspannung, die insbesondere kleiner als die ersten Vorspannung ist, und einer dritten Vorspannung beweglich sein kann. Die dritte Vorspannung kann kleiner als die erste und zweite Vorspannung sein. Ebenso kann der Bremsriemen, insbesondere das erste Ende des Bremsriemens, mit dem Hebelgestänge und das Hebelgestänge mit dem Aktuator und/oder dem Spannhebel, insbesondere in einem deaktivierten Betriebszustand der Ballenwickelvorrichtung bzw. der Antriebs- und Bremseinrichtung, derart verstellbar sein, dass der Aktuator und/oder der Spannhebel zwischen einer ersten Position, in welcher der Bremsriemen eine erste Vorspannung aufweist, und einer zweiten Position, in welcher der Bremsriemen eine zweite Vorspannung aufweist, und einer dritten Position beweglich sein kann, in der der Bremsriemen eine dritte Vorspannung aufweist. Die zweite Vorspannung kann dabei kleiner als die erste Vorspannung und die dritte Vorspannung kleiner als die erste und zweite Vorspannung sein. Die erste Position des Aktuators und/oder Spannhebels kann hierbei mit der ersten Vorspannung korrelieren, die insbesondere eine maximale Vorspannung sein kann. Die dritte Position des Aktuators und/oder Spannhebels kann hierbei mit der dritten Vorspannung korrelieren, die insbesondere ein Leerlauf sein kann, in dem der Bremsriemen keine Vorspannung aufweist, da der Bremsriemen von der Antriebs- und Bremstrommel gelöst ist. Die zweite Vorspannung kann dann in einem Bereich kleiner als die erste Vorspannung und grösser als die dritte Vorspannung verstellbar sein. Vorteilhafterweise kann so die Vorspannung bzw. das Bremsmoment in Abhängigkeit von der Art des Materials derart eingestellt werden, dass dadurch das von Ballen mitgerissene bzw. mitgezogene Umwicklungsmaterial optimal gespannt ist und/oder eine Umwicklungsmaterialtrennung mit optimierter Umwicklungsmaterialspannung erfolgen kann. Darüber hinaus kann so vorteilhafterweise eine Beschädigung und/oder ein Zerreisen des Umwicklungsmaterials vermieden werden.

Die auf den Antriebsriemen wirkende Stellvorrichtung und die auf den Bremsriemen wirkende Spannvorrichtung stehen vorzugsweise miteinander in Verbindung, wobei durch Betätigen der auf den Antriebsriemen wirkenden Stellvorrichtung die auf den Bremsriemen wirkende Spannvorrichtung betätigbar ist. Die Verbindung der Stellvorrichtung und Spannvorrichtung kann durch mechanische, hydraulische oder auch elektrische Stellmittel erfolgen, die in mechanischer Verbindung miteinander stehen. Es ist auch denkbar eine nicht-mechanische Verbindung zwischen der Stellvorrichtung und der Spannvorrichtung über elektronische Mittel herzustellen, so dass beispielsweise beide Vorrichtungen über jeweils voneinander mechanisch getrennte, jedoch elektronisch ansteuerbare Stellmittel betätigbar sind. Im Sinne einer Verbindung stehen die Stellvorrichtung und die Spannvorrichtung dann durch die Steuereinheit miteinander in Verbindung, so dass die Spannvorrichtung in Abhängigkeit von der Stellvorrichtung elektronisch angesteuert würde.

Der Antriebsriemen kann eingangsseitig mit einer Riemenantriebsrolle in Eingriff stehen, wobei letztere mit Antriebsmitteln verbunden ist. Als Antriebsmittel können angetriebene Bauteile, insbesondere direkt oder indirekt angetriebene Presswalzen der Rundballenpresse dienen, derart, dass beispielsweise die Riemenantriebsrolle drehfest mit einer der Presswalzen verbunden ist. Denkbar ist es hier auch einen separaten Antrieb, also einen von den Presswalzen getrennten Antrieb für die Riemenantriebsrolle zu wählen, beispielsweise einen Elektromotor, der in Abhängigkeit verschiedener Betriebsphasen einer Rundballenpresse, insbesondere in einer Einführungsphase, einer Wickelphase und/oder einer Trennphase, ansteuerbar ist.

Es kann eine Freilaufeinrichtung vorgesehen sein, derart, dass die Riemenantriebsrolle Antriebsmitteln für die Riemenantriebsrolle in Antriebsdrehrichtung vorauseilen kann. Die Riemenantriebsrolle ist beispielsweise derart mit einer Freilaufeinrichtung verbunden, dass sie einer angetriebenen und die Riemenantriebsrolle antreibenden Presswalze vorauseilen kann, beziehungsweise eine höhere Umdrehungszahl aufweisen kann und nur in der entgegengesetzten Richtung drehfest mit der Presswalze verbunden ist.

Die oben genannte Stellvorrichtung für den Antriebsriemen ist vorzugsweise über einen weiteren Aktuator in Abhängigkeit von verschiedenen Betriebsphasen für eine Rundballenpresse ansteuerbar, wobei die Betriebsphasen wenigstens eine Einführungsphase, eine Wickelphase und eine Trennphase umfassen. Der weitere Aktuator kann in Form eines elektronisch oder mechanisch ansteuerbaren Hydraulikzylinders oder Elektromotors ausgebildet sein.

Die Erfindung betrifft weiter eine Rundballenpresse mit einer Ballenwickelvorrichtung, insbesondere der Ballenwickelvorrichtung nach einem der Ansprüche 1 bis 9, findet also ihren Einsatz vorzugsweise in Rundballenpressen für landwirtschaftliches Erntegut. Die erfindungsgemässe Rundballenpresse weist die oben beschriebenen Vorteile der erfindungsgemässen Ballenwickelvorrichtung auf.

Eine Rundballenpresse mit oben genannter Ballenwickelvorrichtung kann vorzugsweise nach einem Verfahren betrieben werden, bei dem die Ballenwickelvorrichtung eine Spannhebeleinrichtung umfasst und der Bremsriemen mit der Spannhebeleinrichtung verbunden ist, wobei eine Vorspannung des Bremsriemens mittels der Spannhebeleinrichtung zwischen mindestens drei verschiedenen Vorspannungen verstellt wird. Insbesondere im deaktivierten Betriebszustand der Ballenwickelvorrichtung, beispielsweise beim Einlegen der Umwicklungsmaterialrolle, kann eine Vorspannung des Bremsriemens eingestellt werden. In einer Einführungsphase, in der das Umwicklungsmaterial der Presskammer einer Rundballenpresse zugeführt wird, kann die Antriebs- und Bremseinrichtung mit einem ersten Bremsmoment seitens des Bremsriemens betrieben werden, in einer Wickelphase, in der das Umwicklungsmaterial in der Presskammer um den Ballen gewickelt wird, mit einem zweiten Bremsmoment seitens des Bremsriemens betrieben werden und in einer Trennphase, in der das um den Rundballen gewickelte Umwicklungsmaterial durch eine Trenneinrichtung von der Umwicklungsmaterialrolle getrennt wird, mit einem dritten Bremsmoment seitens des Bremsriemens betrieben werden. Andererseits wird die Antriebs- und Bremseinrichtung seitens des Antriebsriemens mit einem ersten Antriebsmoment in der Einführphase, mit einem zweiten Antriebsmoment in der Wickelphase und mit einem dritten Antriebsmoment in der Trennphase betrieben. Die Ballenwickelvorrichtung wird demnach entsprechend der genannten verschiedenen Betriebsphasen in verschiedenen Betriebsstellungen mit unterschiedlichen auf die Antriebs- und Bremstrommel wirkenden Antriebs- bzw. Bremsmomenten betrieben. Daraus ergeben sich unterschiedliche Antriebsmomente bzw. Bremsmomente bzw. Drehzahlen bzw. Drehgeschwindigkeiten für eine mit der Antriebsrolle in Eingriff stehende Umwicklungsmaterialrolle, wodurch unterschiedliche Umwicklungsmaterialspannungszustände beim Abrollen des Umwicklungsmaterials von der Umwicklungsmaterialrolle in den unterschiedlichen Betriebsphasen der Rundballenpresse erzielbar sind. Der Umwicklungsmaterialspannungszustand kann sich dabei aus dem Maß der Bremsung der Umwicklungsmaterialrolle durch die Antriebsrolle gegenüber der Abrollgeschwindigkeit des Umwicklungsmaterials von der Umwicklungsmaterialrolle ergeben, die durch die Rotation des Ballens beim Mitführen des Umwicklungsmaterials durch den Ballen entsteht. Hierbei kann vorgesehen sein, dass das erste Bremsmoment geringer als das zweite Bremsmoment und/oder das erste Bremsmoment geringer als das dritte Bremsmoment und/oder dass das dritte Bremsmoment ungleich dem zweiten Bremsmoment ist.

Die erfindungsgemässe Ballenwickelvorrichtung oder die erfindungsgemässe Rundballenpresse können eine Steuereinheit umfassen. Das erfindungsgemässe Verfahren kann mit der Steuereinheit durchführbar sein. Die Rundballenpresse, bevorzugt die Ballenwickelvorrichtung und/oder der Aktuator und/oder der weitere Aktuator, können mit der Steuereinheit signalverbunden sein. Mit der Steuereinheit kann die Rundballenpresse, bevorzugt auch die Ballenwickelvorrichtung und/oder der Aktuator der Trenneinrichtung und/oder die Stellvorrichtung und die Spannvorrichtung, einstellbar und/oder verstellbar sein, d.h. diese können sind steuerbar und/oder regelbar. Die Steuereinheit (engl. ECU = electronic control unit oder ECM = electronic control module) kann ein elektronisches Modul und/oder ein eingebettetes System sein. Die Steuereinheit kann als Teil der Ballenwickelvorrichtung ausgebildet sein oder kann an der Rundballenpresse oder an einem Zugfahrzeug, durch welches die Rundballenpresse gezogen wird, bereits vorgesehen sein. Die Steuereinheit kann auch auf die Rundballenpresse und das Zugfahrzeug verteilt sein. Die Steuereinheit und die Ballenwickelvorrichtung, insbesondere der Aktuator und/oder der weitere Aktuator, können mittels eines Kabels oder Drahts oder aber drahtlos, also beispielsweise mittels Funk, miteinander verbunden werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung einer erfindungsgemässen Rundballenpresse mit einer erfindungsgemässen Ballenwickelvorrichtung, und
- Fig. 2: eine vergrößerte schematische Seitenansicht der Ballenwickelvorrichtung aus Figur 1 in einer Betriebsstellung für eine Einführungsphase,
- Fig. 3: eine vergrößerte schematische Seitenansicht der Ballenwickelvorrichtung aus Figur 1 in einer Betriebsstellung für eine Wickelphase,
- Fig. 4: eine vergrößerte schematische Seitenansicht der Ballenwickelvorrichtung aus Figur 1 in einer Betriebsstellung für eine Trennphase,
- Fig. 5: eine weitere vergrößerte schematische Darstellung der Ballenwickelvorrichtung aus Figur 1 mit einer Spannhebeleinrichtung in einer ersten Position, und
- Fig. 6: eine vergrößerte schematische Darstellung der Ballenwickelvorrichtung aus Figur 1 mit einer Spannhebeleinrichtung in einer zweiten Position und
- Fig. 7: eine weitere vergrößerte schematische Darstellung der Ballenwickelvorrichtung aus Figur 1 mit der Spannhebeleinrichtung in einer dritten Position.

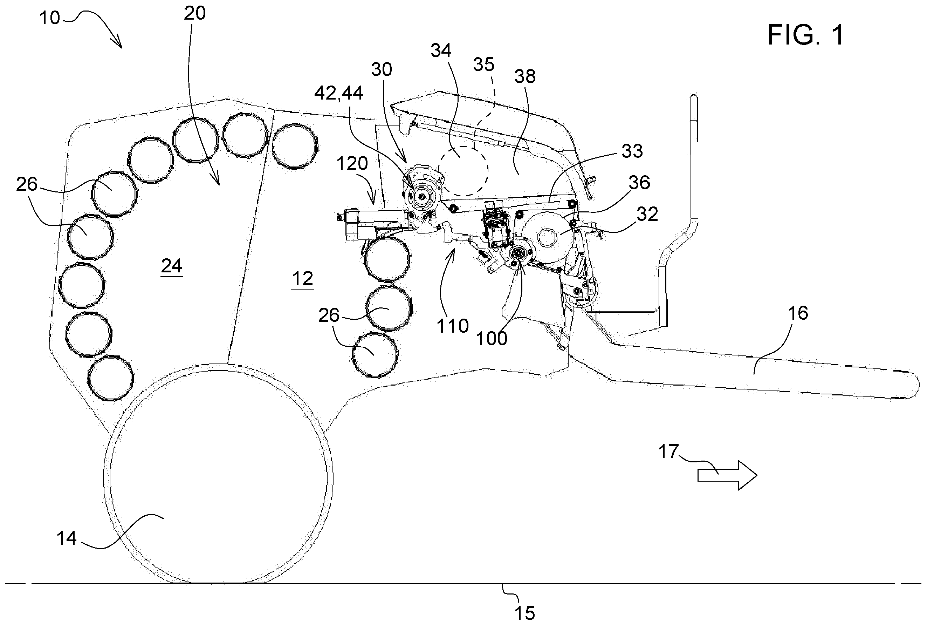

Figur 1 zeigt eine schematische Darstellung der erfindungsgemässen Rundballenpresse 10 mit einer erfindungsgemässen Ballenwickelvorrichtung 30. Die in Figur 1 dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper oder Traktor, anschließbar ist. An einer in Vorwärtsfahrtrichtung 17 vorderen unteren Seite des ersten Gehäuseteils 12 befindet sich in bekannter Weise eine Aufnahme- und Fördereinrichtung (nicht gezeigt) für Erntegut, wobei der erste Gehäuseteil 12 einen vorderen Teil einer Presskammer 20 umgibt. Am ersten Gehäuseteils 12, insbesondere am oberen Bereich des ersten Gehäuseteils 12, befindet sich ein Lager (nicht gezeigt) für ein schwenkbares zweites Gehäuseteil 24, das einen hinteren Teil der Presskammer 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen in der Presskammer 20 gepressten Ballen dar.

Die Rundballenpresse 10, mit größenunveränderlicher Presskammer 20 ausgebildet, enthält eine Vielzahl zueinander parallel verlaufender Presselemente zum Pressen von Erntegut in Form von Presswalzen 26 (exemplarisch wurden hier nur einige wenige Presswalzen 26 mit dem Bezugszeichen "26" versehen), deren Rotationsachsen bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlicher Presskammer 20 bzw. als Rundballenpresse 10 mit variabler Presskammer 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickelvorrichtung 30, die mit einer Umwicklungsmaterialrolle 32 bestückt ist. Als Umwicklungsmaterial 33 kann bevorzugt eine Folie eingesetzt werden. Die Ballenwickelvorrichtung 30 kann ausserdem zusätzlich eine weitere Umwicklungsmaterialrolle 34 mit einem weiteren Umwicklungsmaterial 35 umfassen. Als weiteres Umwicklungsmaterial 35 kann bevorzugt eine Folie einer anderen Art oder ein Netz eingesetzt werden. Die Umwicklungsmateriarolle 32 kann in einem ersten Kompartiment 36 und die weitere Umwicklungsmaterialrolle 34 kann in einem zweiten Kompartiment 38 der Rundballenpresse 10, insbesondere der Ballenwickelvorrichtung 30 angeordnet sein. Das erste und zweite Kompartiment 36, 38 können voneinander beabstandet oder benachbart zueinander sein. Die Ballenwickelvorrichtung 30 umfasst ferner eine Zuführeinrichtung (nicht gezeigt) für das Umwicklungsmaterial, mittels welcher das Umwicklungsmaterial 33 von der Umwicklungsmaterialrolle 32 und/oder das weitere Umwicklungsmaterial 35 von der weiteren Umwicklungsmaterialrolle 34 in die Presskammer 20 geführt wird. Bevorzugt kann die Zuführeinrichtung entweder das Umwicklungsmaterial 33 von der Umwicklungsmaterialrolle 32 oder das weitere Umwicklungsmaterial 35 von der weiteren Umwicklungsmaterialrolle 34 in die Presskammer 20 führen.

Nachdem der eigentliche Pressvorgang, also die Erntegutaufnahme und Bildung eines Rundballens durch die Presswalzen 26, abgeschlossen ist, wird die Ballenwickelvorrichtung 30 aktiviert, und ein sich dem Pressvorgang anschließender Umwicklungsvorgang eingeleitet. Bei Einleiten eines Umwicklungsvorgangs wird in einer Einführungsphase durch eine mechanisch ausgelöste Zuführbewegung Umwicklungsmaterial und/oder weiteres Umwicklungsmaterial 33, 35 in Richtung der Presskammer 20 geführt, so dass ein freies Umwicklungsmaterialende mit dem sich in der Presskammer 20 rotierenden Rundballen in Berührung kommen kann und das Umwicklungsmaterial und/oder weiteres Umwicklungsmaterial 33, 35 mitgerissen und aufgenommen wird. Durch Rotation des Rundballens wird das Umwicklungsmaterial 33 und/oder das weitere Umwicklungsmaterial 35 in einer Wickelphase in einer oder mehreren Lagen um den Umfang des Rundballens gewickelt. Der Umwicklungsvorgang wird mit einer Trennphase, in der das um den Rundballen gewickelte Umwicklungsmaterial 33 von der Umwicklungsmaterialrolle 32 und/oder das weitere Umwicklungsmaterial 35 von der weiteren Umwicklungsmaterialrolle 34 durch eine Trenneinrichtung 120 getrennt wird, abgeschlossen.

Die Ballenwickelvorrichtung 30 kann eine Antriebs- und Bremseinrichtung 42 umfassen, die mit einer Antriebsrolle 44 verbunden ist. Die Antriebsrolle 44 kann mit der weiteren Umwicklungsmaterialrolle 34 in Eingriff, bzw. kann mit dieser in einem Reibschluss stehen. Die Antriebs- und Bremseinrichtung 42 umfasst ferner eine kombinierte Antriebs- und Bremstrommel 46, die sowohl mit einem variabel spannbaren Antriebsriemen (nicht gezeigt) als auch mit einem variabel spannbaren Bremsriemen (nicht gezeigt) in Verbindung steht. Die Antriebs- und Bremstrommel 46 ist drehfest mit der Antriebsrolle 44 verbunden und steht ferner mit dem Antriebsriemen und mit dem Bremsriemen in Verbindung.

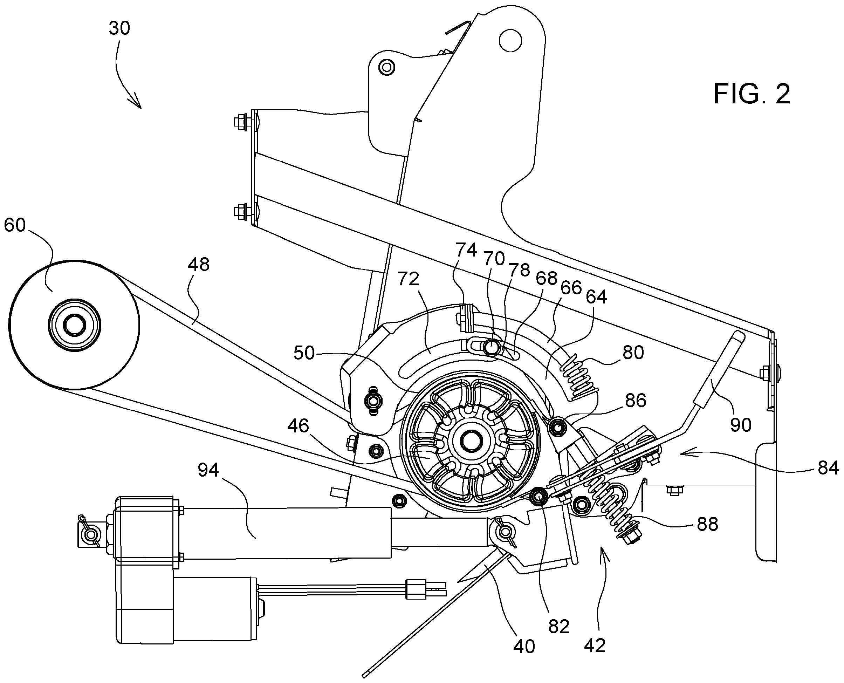

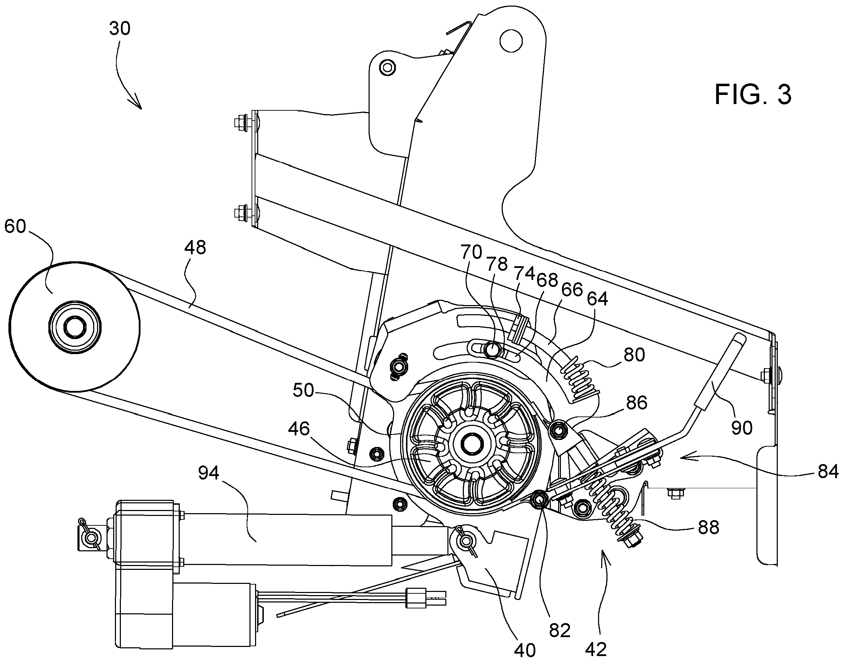

Die Umwicklungsmaterialrolle 32 kann mit der Bremsrolle 100 in Eingriff, bzw. kann mit dieser in einem Reibschluss stehen. Darüber hinaus kann eine Blockiereinrichtung 110 vorgesehen ist, die mit der Bremsrolle 100 zusammenwirkt, wobei die Blockiereinrichtung 110 mittels der Trenneinrichtung 120 derart betätigbar sein kann, dass eine Drehbewegung der Bremsrolle 100 mit der Blockiereinrichtung 110 bremsbar, insbesondere stoppbar und/oder blockierbar ist. Die Trenneinrichtung 120 kann einen weiteren Aktuator (Bezugszeichen 94, Figuren 2 bis 4), der zwischen mindestens einer aktiven Trennposition und einer inaktiven Trennposition bewegbar ist sowie eine Messeranordnung (Bezugszeichen 40, Figuren 2 bis 4) umfassen.

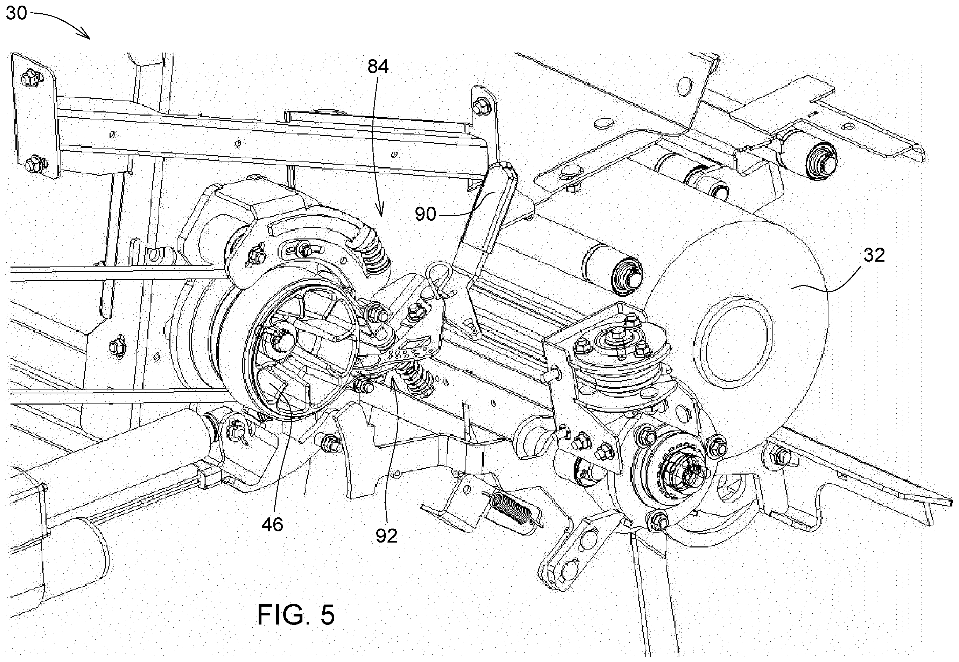

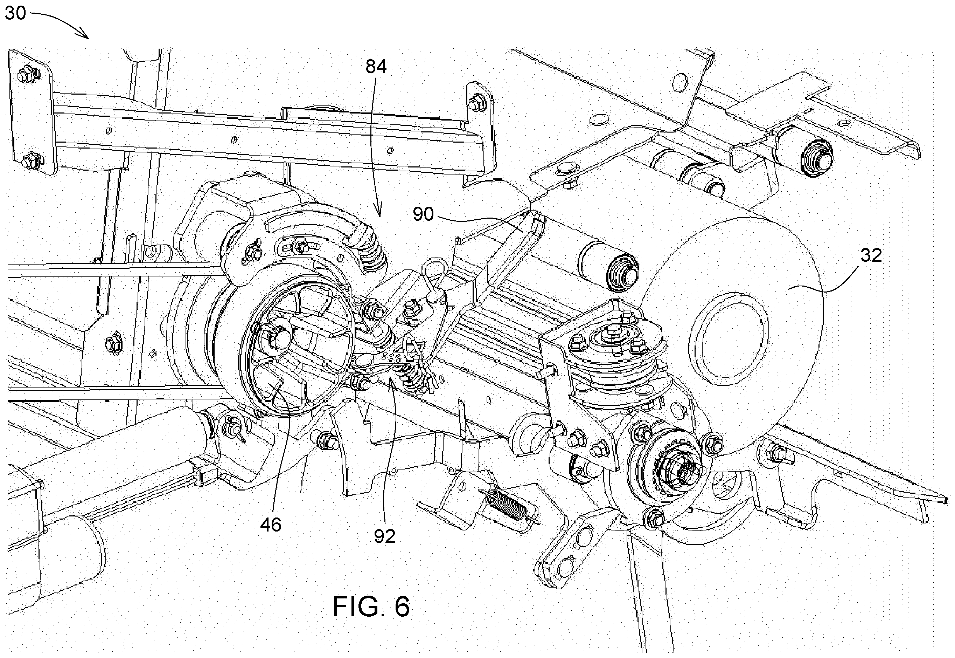

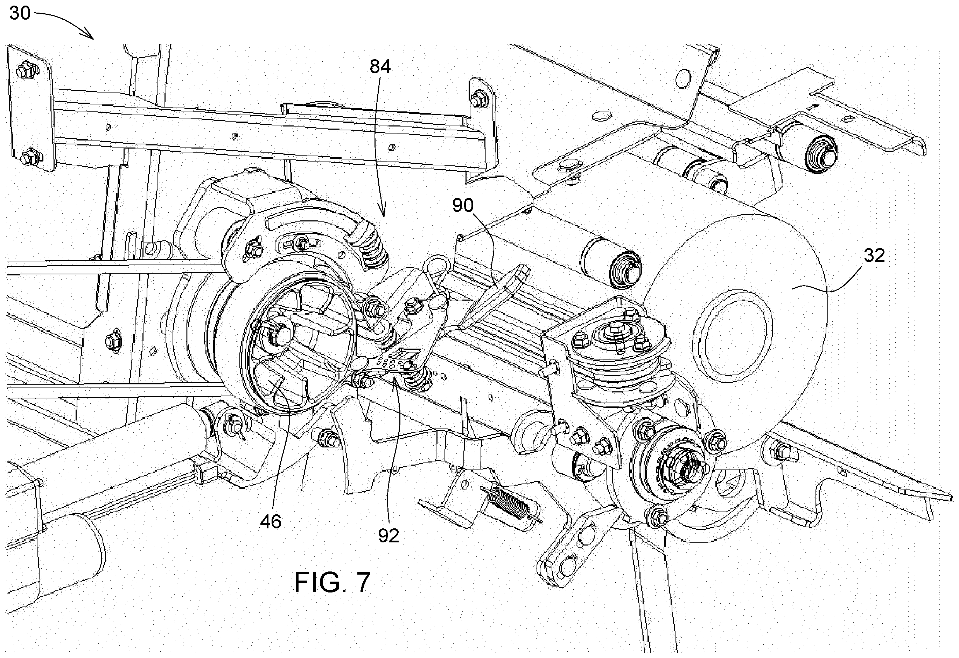

Die in den Figuren 2 bis 7 gezeigten weiteren vergrößerten schematischen Darstellungen oder Seitenansichten der Ballenwickelvorrichtung 30 entsprechen im Wesentlichen der in Figur 1 gezeigten Ballenwickelvorrichtung 30, sodass im Folgenden lediglich auf Details und/oder Unterschiede eingegangen wird. Insbesondere die Figuren 5 bis 7 zeigen weitere vergrößerte schematische Darstellung der Ballenwickelvorrichtung aus Figur 1 mit einer Spannhebeleinrichtung in einer ersten Position (Figur 5), zweiten Position (Figur 6) und dritten Position (Figur 7). Wie zudem auch in den Figuren 2 bis 7 im Detail dargestellt ist, umfasst die Ballenwickelvorrichtung 30 eine Antriebs- und Bremseinrichtung 42, die mit einer Antriebsrolle 44 verbunden ist. Die Antriebsrolle 44 und die Umwicklungsmaterialrolle 32 sind zueinander beabstandet, insbesondere derart zueinander beabstandet, so dass diese nicht miteinander in Eingriff bringbar sind. Die Antriebs- und Bremseinrichtung 42 umfasst ferner eine kombinierte Antriebs- und Bremstrommel 46, die sowohl mit einem variabel spannbaren Antriebsriemen 48 als auch mit einem variabel spannbaren Bremsriemen 50 in Verbindung steht. Die Antriebs- und Bremstrommel 46 ist drehfest mit der Antriebsrolle 44 verbunden und steht ferner mit dem Antriebsriemen 48 und mit dem Bremsriemen 50 in Verbindung.

Die Antriebs- und Bremseinrichtung 42 umfasst eine betätigbare bzw. in Umfangsrichtung der Antriebs- und Bremstrommel 46 verstellbare, auf den Antriebsriemen 48 wirkende Stellvorrichtung. Der Antriebsriemen 48 ist an einer Seite um eine Riemenantriebsrolle 60 gelegt, die mit einem Antriebselement drehfest in Verbindung steht. Als Antriebselement dient hier eine der Presswalzen 26, die von dem Ballen während des Ballenbildungsprozesses in Rotation versetzt wird. An der der einen Seite gegenüberliegenden Seite des Antriebsriemens 48 ist dieser um die Antriebs- und Bremstrommel 46 gelegt. Mittels der Stellvorrichtung kann der Antriebsriemen in unterschiedliche Spannungszustände gebracht werden, indem diese unterschiedlich stark auf den Antriebsriemen gedrückt wird, wie insbesondere in den Figuren 2 bis 4 dargestellt ist. In Abhängigkeit davon werden durch den sich ändernden Reibschluss zwischen Riemenantriebsrolle 60 und Antriebsriemen 48 bzw. zwischen Antriebs- und Bremstrommel 46 und Antriebsriemen 48 unterschiedliche Antriebsmomente von der Riemenantriebsrolle 60 auf die Antriebs- und Bremstrommel 46 übertragen.

Die Ballenwickelvorrichtung 30 umfasst ferner eine betätigbare und auf den Bremsriemen 50 wirkende Spannvorrichtung, die sich ebenfalls in Umfangsrichtung der Antriebs- und Bremstrommel 46 verstellbar erstreckt und diese teilweise in Umfangsrichtung umschließt. Die Spannvorrichtung 62 weist einen ersten bogenförmigen Führungsarm 64 und einen zweiten bogenförmigen Führungsarm 66 auf. Beide Führungsarme 64, 66 verlaufen in Umfangsrichtung der Antriebs- und Bremstrommel 46 parallel zueinander. Der erste Führungsarm 64 ist mit einer bogenförmigen Nut 68 versehen, in der eine Stellmutter 70 verstellbar fixiert ist. Die Stellmutter 68 wird ferner in einer ebenfalls bogenförmigen Stellnut 72 verschiebbar geführt, wobei die Stellnut 72 in einem Stellkörper ausgebildet ist und parallel zu der Nut 68 des ersten Führungsarms 64 der Spannvorrichtung verläuft, wie in den Figuren 2 bis 7 abgebildet ist.

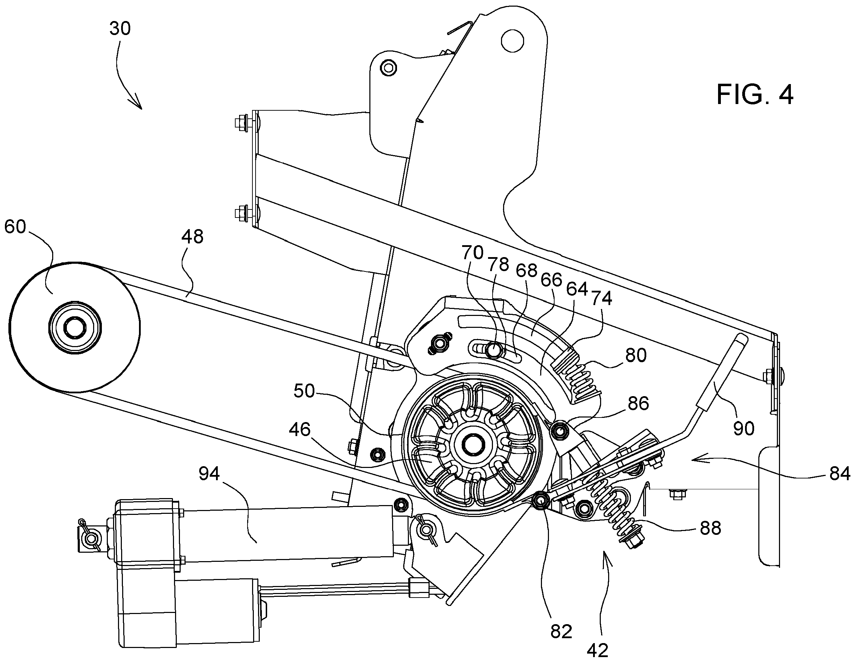

Der zweite Führungsarm 66 steht mit einer sich vom Stellkörper 54 erstreckenden Lasche 74 in Eingriff, wobei die Lasche 74 eine Öffnung (nicht gezeigt) aufweist, durch die der Führungsarm 66 geführt wird (siehe bspw. Figur 4). Die Stellschraube 70 stellt einen Anschlag dar, der an einem Ende 78 der Stellnut 72 zur Anlage kommt, wenn der Stellkörper gegenüber der Spannvorrichtung in Umfangsrichtung entgegen dem Uhrzeigersinn in eine erste Extremstellung gemäß Figur 2 verstellt wird. Die Lasche 74 stellt einen Anschlag dar, der auf einer auf dem Führungsarm 66 angeordneten Spiralfeder 80 zur Anlage kommt, wenn der Stellkörper gegenüber der Spannvorrichtung in Umfangsrichtung im Uhrzeigersinn in eine zweite Extremstellung gemäß Figur 4 verstellt wird. Wie beispielsweise in den Figuren 2 bis 4 deutlich wird, ist eine Spannrolle in der ersten Extremstellung mit einem maximalen Maß auf den Antriebsriemen 48 eingestellt, so dass dieser in der ersten Extremstellung des Stellkörpers mit einer maximalen Spannung betrieben wird. In der zweiten Extremstellung des Stellkörpers ist die Spannrolle hingegen mit einem minimalen Maß auf den Antriebsriemen 48 eingestellt, nämlich losgelöst von diesem, so dass der Antriebsriemen 48 ohne bzw. mit einer minimalen Spannung betrieben wird.

Der Bremsriemen 50 ist an einem ersten Ende 82 an der Spannhebeleinrichtung 84 befestigt, um die Antriebs- und Bremstrommel 46 gelegt, und an einem zweiten Ende 86 mit der Spannvorrichtung verbunden. Die Spannhebeleinrichtung 84 kann insbesondere am Rahmen der Rundballenpresse 10 fixiert sein. Die Spannvorrichtung ist mittels einer Spannfeder 88 gegenüber dem Rahmen der Rundballenpresse 10 vorgespannt und derart eingestellt, dass die Spannvorrichtung in einer Vorspannstellung gehalten wird, in der die Stellschraube 70 in einem mittleren Bereich der Stellnut gelegen ist und der Bremsriemen 50 mit einer Vorspannung um die Antriebs- und Bremstrommel 46 gespannt ist.

Ferner ist zwischen den mit der Riemenantriebsrolle 60 verbundenen Antriebsmitteln und der Riemenantriebsrolle 60 eine Freilaufeinrichtung (nicht gezeigt) vorgesehen, damit gewährleistet wird, dass Antriebsmittel und Antriebsrolle 44 unterschiedliche Drehzahlen einnehmen können. Dies wird beispielsweise dann eintreten, wenn der Rundballen in der Wickelphase das Antriebselement, insbesondere eine der Presswalzen 26, mit einer ersten Drehzahl antreibt und gleichzeitig das Umwicklungsmaterial mitreißt, so dass die Umwicklungsmaterialrolle 32 eine relativ hohe Abrolldrehzahl aufnimmt. Die mit der Umwicklungsmaterialrolle 32 in Eingriff stehende Antriebsrolle 44 nimmt aufgrund ihres geringeren Durchmessers eine noch höhere Drehzahl auf, die wiederum höher ausfallen kann, als die Drehzahl der Antriebsmittel bzw. als die der betreffenden Presswalze 26. Durch den Freilauf wird quasi gewährleistet, dass die Riemenantriebsrolle 60 in diesem Zustand betrieben werden und in Antriebsdrehrichtung den Antriebsmitteln vorauseilen kann, beziehungsweise eine höhere Drehzahl aufweisen kann, und nur in der entgegengesetzten Richtung drehfest mit der Presswalze 26 verbunden ist.

Die Stellvorrichtung 52 ist ferner über einen weiteren Aktuator 94 in Abhängigkeit von Betriebsphasen der Rundballenpresse 10 ansteuerbar, wobei die Betriebsphasen wenigstens eine Einführungsphase, eine Wickelphase und eine Trennphase umfassen. Der weitere Aktuator 94 ist mit einer Steuereinheit (nicht gezeigt) verbunden, die mittels geeigneter Sensoren Steuersignale entsprechend der sich einstellenden Betriebsphasen generiert und den weiteren Aktuator 94 in Abhängigkeit dieser Steuersignale zum Verstellen der Stellvorrichtung 52 ansteuert.

Wie in allen Figuren, aber insbesondere in den Figuren 2 bis 7 gezeigt ist, umfasst die Ballenwickelvorrichtung 30 eine Spannhebeleinrichtung 84 und der Bremsriemen 50 ist mit der Spannhebeleinrichtung 84 verbunden. Da der Bremsriemen 50 an einem ersten Ende 82 an der Spannhebeleinrichtung 84 befestigt, um die Antriebs- und Bremstrommel 46 gelegt, und an einem zweiten Ende 86 mit der Spannvorrichtung verbunden ist und die Spannvorrichtung ist mittels einer Spannfeder 88 gegenüber dem Rahmen der Rundballenpresse 10 vorgespannt ist, kann die Vorspannung des Bremsriemens 50 mittels der Spannhebeleinrichtung 84 zwischen mindestens drei verschiedenen Vorspannungen verstellbar sein, indem das erste Ende 82 verlagert wird. Im Speziellen umfasst die Spannhebeleinrichtung 84 einen betätigbaren Spannhebel 90, der mit einem Hebelgestänge 92 zusammenwirkt, über welches eine Vorspannung des Bremsriemens 50 eingestellt werden kann, insbesondere indem das erste Ende 82 des Bremsriemens 50 entsprechend verlagert wird. Mit anderen Worten, das erste Ende 82 des Bremsriemens 50 ist mit dem Hebelgestänge 92 verbunden und das erste Ende 82 des Bremsriemens 50 ist mit dem Hebelgestänge 92 derart verstellbar, bevorzugt einstellbar und/oder feststellbar, dass der Bremsriemen 50 mittels des Hebelgestänges 92 variabel in mindestens drei verschiedenen Vorspannungen spannbar ist. Dazu kann die Spannhebeleinrichtung 84, insbesondere der Spannhebel 90 und das Hebelgestänge 92, durch Betätigen des Spannhebels 90 variabel in eine erste, zweite oder dritte Position gebracht und so der Bremsriemen 50 in eine der mindestens drei verschiedenen Vorspannungen gespannt werden, wobei die erste Position mit der ersten Vorspannung und die zweite Position mit der zweiten Vorspannung und die dritte Position mit der dritten Vorspannung korrelieren bzw. übereinstimmen. Ebenso kann der Bremsriemen 50, insbesondere das erste Ende des Bremsriemens 50, aber auch mit dem Hebelgestänge 92 und das Hebelgestänge 92 mit einem Aktuator, insbesondere in einem deaktivierten Betriebszustand der Ballenwickelvorrichtung 30 bzw. der Antriebs- und Bremseinrichtung, derart verstellbar sein, dass der Aktuator zwischen einer ersten Position, in welcher der Bremsriemen 50 eine erste Vorspannung aufweist, und einer zweiten Position, in welcher der Bremsriemen 50 eine zweite Vorspannung aufweist, und einer dritten Position beweglich sein kann, in der der Bremsriemen 50 eine dritte Vorspannung aufweist. Die dritte Position des Aktuators und/oder Spannhebels 90 kann insbesondere ein Leerlauf sein, in dem der Bremsriemen 50 keine Vorspannung aufweist, da der Bremsriemen 50 von der Antriebs- und Bremstrommel 46 gelöst ist. Durch die variable Einstellbarkeit der Vorspannung des Bremsriemens 50 können für die Ballenwickelvorrichtung 30 die Bremsmomente an der Antriebs- und Bremseinrichtung 42 bzw. an der Riemenantriebsrolle 60 in Abhängigkeit von der Art des Umwicklungsmaterials eingestellt und/oder festgestellt werden.

Ein Verfahren zum Betreiben der Rundballenpresse 10 sieht vor, dass in einer Einführungsphase, in der das Umwicklungsmaterial 33 der Presskammer 20 zugeführt wird, die Antriebs- und Bremseinrichtung 42 mit einem ersten Bremsmoment seitens des Bremsriemens 50 betrieben wird, in einer Wickelphase, in der das Umwicklungsmaterial 33 und/oder das weitere Umwicklungsmaterial 35 in der Presskammer 20 um den Ballen gewickelt wird, mit einem zweiten Bremsmoment seitens des Bremsriemens 50 betrieben wird und in einer Trennphase, in der das um den Rundballen gewickelte Umwicklungsmaterial 33 durch die Trenneinrichtung 120 von der Umwicklungsmaterialrolle 32 getrennt wird, mit einem dritten Bremsmoment seitens des Bremsriemens 50 betrieben wird.

Es ist ferner vorgesehen, dass das erste Bremsmoment geringer als das zweite und/oder das dritte Bremsmoment ist, wobei das dritte Bremsmoment auch ungleich dem zweiten Bremsmoment sein kann. Durch die oben ausgeführte Anordnung einer Ballenwickelvorrichtung 30 wird gewährleistet, dass das Umwicklungsmaterial 33 und/oder das weitere Umwicklungsmaterial 35 in der Einführungsphase spannungsarm bzw. spannungsfrei in den Pressraum 20 eingeführt werden kann. Ferner kann das Umwicklungsmaterial 33 und/oder das weitere Umwicklungsmaterial 35 in der Wickelphase unter einer höheren Grundspannung stehen und in der Trennphase die Spannung am Umwicklungsmaterial 33 und/oder das weitere Umwicklungsmaterial 35 nochmals erhöht oder gegebenenfalls auch reduziert werden.

## Patentansprüche

1. Ballenwickelvorrichtung (30) für eine Rundballenpresse (10),
umfassend eine Antriebsrolle (44), mit der ein Umwicklungsmaterial (33) von einer Umwicklungsmaterialrolle (32) abrollbar ist, wobei die Antriebsrolle (44) mit einer Antriebs- und Bremseinrichtung (42) verbunden ist, und die Antriebs- und Bremseinrichtung (42) mit einem variabel spannbaren Bremsriemen (50) in Verbindung steht, wobei die Ballenwickelvorrichtung (30) eine Spannhebeleinrichtung (84) umfasst, und der Bremsriemen (50) mit der Spannhebeleinrichtung (84) verbunden ist,
**dadurch gekennzeichnet, dass**
eine Vorspannung des Bremsriemens (50) mittels der Spannhebeleinrichtung (84) zwischen mindestens drei verschiedenen Vorspannungen verstellbar ist.

2. Ballenwickelvorrichtung (30) nach Anspruch 1, **dadurch gekennzeichnet, dass** die Antriebs- und Bremseinrichtung (42) zumindest eine Bremstrommel (46), insbesondere eine kombinierte Antriebs- und Bremstrommel (46) umfasst, wobei die Bremstrommel (46), insbesondere die kombinierte Antriebs- und Bremstrommel (46), drehfest mit der Antriebsrolle (44) verbunden ist, und mit dem Bremsriemen (50) in Verbindung steht, insbesondere die kombinierte Antriebs- und Bremstrommel (46) mit dem Brems- und Antriebsriemen (50, 48) in Verbindung steht.

3. Ballenwickelvorrichtung (30) nach Anspruch 1 oder 2, **dadurch gekennzeichnet, dass** die Antriebs- und Bremseinrichtung (42) eine betätigbare und auf den Antriebsriemen (48) wirkende Stellvorrichtung (52) umfasst.

4. Ballenwickelvorrichtung (30) zumindest einem der vorangehenden Ansprüche, **dadurch gekennzeichnet, dass** die Ballenwickelvorrichtung (30), insbesondere die Antriebs- und Bremseinrichtung (42), eine auf den Bremsriemen (50) wirkende Spannvorrichtung (62) umfasst.

5. Ballenwickelvorrichtung (30) nach zumindest einem der vorangehenden Ansprüche, **dadurch gekennzeichnet, dass** die Spannhebeleinrichtung (84) ein Hebelgestänge (92) umfasst, wobei der Bremsriemen (50) mit dem Hebelgestänge (92) verbunden ist, und der Bremsriemen (50) mit dem Hebelgestänge (92) derart verstellbar ist, dass die Vorspannung des Bremsriemens (50) mittels des Hebelgestänges (92) zwischen mindestens drei verschiedenen Vorspannungen verstellbar ist.

6. Ballenwickelvorrichtung (30) nach mindestens einem der vorangehenden Ansprüche, **dadurch gekennzeichnet, dass** die auf den Antriebsriemen (48) wirkende Stellvorrichtung (52) und die auf den Bremsriemen (50) wirkende Spannvorrichtung (62) miteinander in Verbindung stehen und durch Betätigen der auf den Antriebsriemen (48) wirkenden Stellvorrichtung (52) die auf den Bremsriemen (50) wirkende Spannvorrichtung (62) betätigbar ist.

7. Ballenwickelvorrichtung (30) nach mindestens einem der vorangehenden Ansprüche, **dadurch gekennzeichnet, dass** der Antriebsriemen (48) mit einer Riemenantriebsrolle (60) in Eingriff steht, welche mit Antriebsmitteln verbindbar ist.

8. Ballenwickelvorrichtung (30) nach Anspruch 6, **dadurch gekennzeichnet, dass** eine Freilaufeinrichtung vorgesehen ist, derart, dass die Riemenantriebsrolle (60) Antriebsmitteln für die Riemenantriebsrolle (60) in Antriebsdrehrichtung vorauseilen kann.

9. Ballenwickelvorrichtung (30) nach mindestens einem der vorangehenden Ansprüche, **dadurch gekennzeichnet, dass** die Stellvorrichtung (52) über einen weiteren Aktuator (94) in Abhängigkeit von Betriebsphasen einer Rundballenpresse (10) ansteuerbar ist, wobei die Betriebsphasen wenigstens eine Einführungsphase, eine Wickelphase und eine Trennphase umfassen.

10. Rundballenpresse (10) mit einer Ballenwickelvorrichtung (30) nach einem der Ansprüche 1 bis 9.

## Claims

1. Bale wrapping device (30) for a roundbaler (10), comprising a drive roller (44) by which a wrapping material (33) is able to be unrolled from a wrapping material roller (32), wherein the drive roller (44) is connected to a drive and brake apparatus (42), and the drive and brake apparatus (42) is connected to a brake belt (50) which is able to be tensioned in a variable manner, wherein the bale wrapping device (30) comprises a tensioning lever apparatus (84), and the brake belt (50) is connected to the tensioning lever apparatus (84),
**characterized in that**
a pretensioning of the brake belt (50) is adjustable by means of the tensioning lever apparatus (84) between at least three different pretensionings.

2. Bale wrapping device (30) according to Claim 1, **characterized in that** the drive and brake apparatus (42) comprises at least one brake drum (46), in particular a combined drive and brake drum (46), wherein the brake drum (46), in particular the combined drive and brake drum (46), is connected fixedly in terms of rotation to the drive roller (44), and is connected to the brake belt (50), in particular the combined drive and brake drum (46) is connected to the brake and drive belt (50, 48).

3. Bale wrapping device (30) according to Claim 1 or 2, **characterized in that** the drive and brake apparatus (42) comprises an actuatable adjusting device (52) acting on the drive belt (48).

4. Bale wrapping device (30) according to at least one of the preceding claims, **characterized in that** the bale wrapping device (30), in particular the drive and brake apparatus (42), comprises a tensioning device (62) acting on the brake belt (50).

5. Bale wrapping device (30) according to at least one of the preceding claims, **characterized in that** the tensioning lever apparatus (84) comprises a lever rod system (92), wherein the brake belt (50) is connected to the lever rod system (92), and the brake belt (50) is adjustable by the lever rod system (92) such that the pretensioning of the brake belt (50) is adjustable by means of the lever rod system (92) between at least three different pretensionings.

6. Bale wrapping device (30) according to at least one of the preceding claims, **characterized in that** the adjusting device (52) acting on the drive belt (48) and the tensioning device (62) acting on the brake belt (50) are connected together and, by actuating the adjusting device (52) acting on the drive belt (48), the tensioning device (62) acting on the brake belt (50) is actuatable.

7. Bale wrapping device (30) according to at least one of the preceding claims, **characterized in that** the drive belt (48) is in engagement with a belt drive roller (60) which is able to be connected to drive means.

8. Bale wrapping device (30) according to Claim 6, **characterized in that** a freewheel apparatus is provided such that the belt drive roller (60) may run ahead of drive means for the belt drive roller (60) in the rotational direction of the drive.

9. Bale wrapping device (30) according to at least one of the preceding claims, **characterized in that** the adjusting device (52) is able to be activated by a further actuator (94) as a function of operating phases of a roundbaler (10), wherein the operating phases comprise at least one introduction phase, a wrapping phase and a cutting phase.

10. Roundbaler (10) comprising a bale wrapping device (30) according to one of Claims 1 to 9.

## Revendications

1. Dispositif d'enveloppement de balles (30) pour une presse à balles rondes (10),
comprenant un rouleau d'entraînement (44), avec lequel un matériau d'enveloppement (33) peut être déroulé d'un rouleau de matériau d'enveloppement (32), le rouleau d'entraînement (44) étant relié à un appareil d'entraînement et de freinage (42), et l'appareil d'entraînement et de freinage (42) étant en liaison avec une courroie de freinage pouvant être mise sous tension de manière variable (50), le dispositif d'enveloppement de balles (30) comprenant un appareil de levier de serrage (84), et la courroie de freinage (50) étant reliée à l'appareil de levier de serrage (84),
**caractérisé en ce que**
une précontrainte de la courroie de freinage (50) peut être réglée entre au moins trois précontraintes différentes au moyen de l'appareil de levier de serrage (84) .

2. Dispositif d'enveloppement de balles (30) selon la revendication 1, **caractérisé en ce que** l'appareil d'entraînement et de freinage (42) comprend au moins un tambour de freinage (46), notamment un tambour d'entraînement et de freinage combiné (46), le tambour de freinage (46), notamment le tambour d'entraînement et de freinage combiné (46), étant relié au rouleau d'entraînement (44) de manière immobile en rotation et étant en liaison avec la courroie de freinage (50), notamment le tambour d'entraînement et de freinage combiné (46) étant en liaison avec la courroie de freinage et d'entraînement (50, 48).

3. Dispositif d'enveloppement de balles (30) selon la revendication 1 ou 2, **caractérisé en ce que** l'appareil d'entraînement et de freinage (42) comprend un dispositif de réglage (52) actionnable et agissant sur la courroie d'entraînement (48).

4. Dispositif d'enveloppement de balles (30) selon au moins l'une quelconque des revendications précédentes, **caractérisé en ce que** le dispositif d'enveloppement de balles (30), notamment l'appareil d'entraînement et de freinage (42), comprend un dispositif de serrage (62) agissant sur la courroie de freinage (50).

5. Dispositif d'enveloppement de balles (30) selon au moins l'une quelconque des revendications précédentes, **caractérisé en ce que** l'appareil de levier de serrage (84) comprend une tringlerie articulée (92), la courroie de freinage (50) étant reliée à la tringlerie articulée (92), et la courroie de freinage (50) pouvant être réglée avec la tringlerie articulée (92) de telle sorte que la précontrainte de la courroie de freinage (50) peut être réglée au moyen de la tringlerie articulée (92) entre au moins précontraintes différentes.

6. Dispositif d'enveloppement de balles (30) selon au moins l'une quelconque des revendications précédentes, **caractérisé en ce que** le dispositif de réglage (52) agissant sur la courroie d'entraînement (48) et le dispositif de serrage (62) agissant sur la courroie de freinage (50) sont en liaison l'un avec l'autre et le dispositif de serrage (62) agissant sur la courroie de freinage (50) peut être actionné par actionnement du dispositif de réglage (52) agissant sur la courroie d'entraînement (48).

7. Dispositif d'enveloppement de balles (30) selon au moins l'une quelconque des revendications précédentes, **caractérisé en ce que** la courroie d'entraînement (48) est en prise avec un rouleau d'entraînement de courroie (60) qui peut être relié à des moyens d'entraînement.

8. Dispositif d'enveloppement de balles (30) selon la revendication 6, **caractérisé en ce qu'**un appareil de roue libre est prévu, de telle sorte que le rouleau d'entraînement de courroie (60) peut devancer des moyens d'entraînement pour le rouleau d'entraînement de courroie (60) dans la direction de rotation d'entraînement.

9. Dispositif d'enveloppement de balles (30) selon au moins l'une quelconque des revendications précédentes, **caractérisé en ce que** le dispositif de réglage (52) peut être commandé par l'intermédiaire d'un autre actionneur (94) en fonction de phases de fonctionnement d'une presse à balles rondes (10), les phases de fonctionnement comprenant au moins une phase d'introduction, une phase d'enveloppement et une phase de séparation.

10. Presse à balles rondes (10) avec un dispositif d'enveloppement de balles (30) selon l'une quelconque des revendications 1 à 9.
